# EUROPEAN PATENT SPECIFICATION

(11) **EP 2 065 228 B1**
(45) Date of publication and mention of the grant of the patent: **10.04.2013**
(21) Application number: 07121615.4
(22) Date of filing: 27.11.2007
(51) Int. Cl.: B60C 23/04

(54) **Energy harvesting system and method**
Energiegewinnungssystem und Verfahren
Système et procédé d'exploitation d'énergie

(43) Date of publication of application: 03.06.2009
(73) Proprietor: Infineon Technologies AG, 85579 Neubiberg (DE)
(72) Inventor: Kvisteroy, Terje, 3181 Horten (NO); Hedenstierna, Nils, 426 69 V Frolunda (SE)
(74) Representative: Zimmermann, Tankred Klaus

(56) References cited:
- US-A1- 2004 100 100
- US-A1- 2006 022 555
- US-A1- 2006 130 589
- US-A1- 2007 074 566
- EPSTEIN A H: "MILLIMETER-SCALE, MEMS GAS TURBINE ENGINES" PROCEEDINGS OF ASME TURBO EXPO, XX, XX, 16 June 2003 (2003-06-16), pages 1-28, XP001233858

## Description

The present invention relates to an energy harvesting system and method.

Systems comprising circuitry housed within or connected to vehicle tyres, such as a tyre pressure monitoring system (TPMS) sensor, need power for performing functions such as sensing pressure and transmitting data to a central unit of the system. Known TPMS modules are powered either by a battery, by an inductive field operated with coils or by back-scatter using RF frequencies. However, a battery has a limited lifetime, is expensive and is not environmentally friendly.

Devices that convert different types of energy obtained from a system into electrical energy are known as "energy harvesters", and such devices attract increasing research interest today.

For example, US 2004/100100 discloses an apparatus and method for energy generation within a tyre; US 2006/022555 discloses an energy harvesting system, apparatus and method; Epstein, A H: "Millimeter-scale MEMS Gas Turbin Engines", Proceedings of ASME Turbo Expo, 16 June 2003 discusses millimeter-size gas turbine engines and the underlying technical issues; and US 2007/074566 discloses power generation utilising tire pressure changes.

Micromechanical energy harvesters with a seismic mass have problems in generating enough power for devices such as TPMS sensors, due to the low frequency (approximately 20Hz in rotation speed and approximately <500Hz in wheel vibration) of the vibrations and rotations in the associated tyre. This low frequency makes it necessary to use a relatively large seismic mass and a complex method to transform the kinetic energy into electrical energy. A large mass increases the size of the chip and makes the device expensive. Large electrodes are necessary to achieve adequately high kinetic to electrical efficiency. Additionally, large coils are often necessary as part of the electrical AC-DC conversion (commonly referred to as a DC-DC conversion in the art). The present invention seeks to overcome the above problems.

According to the present invention there is provided an energy harvesting system arranged to harvest energy generated by a rotating tyre, the system comprising: a chamber holding fluid; and an energy converter arranged to extract kinetic energy generated by a flow of the fluid, the flow being induced by a deformation of the chamber during the tyre rotation, and further arranged to convert the kinetic energy into electrical energy, the system being characterised by further comprising: a mass connected to the chamber, the mass being arranged to deform the chamber via a movement of the mass.

According to the present invention there is further provided a method of harvesting energy generated by a rotating tyre, the method comprising the steps of: inducing a flow of fluid that is provided in a chamber, the flow being induced by a deformation of the chamber during the tyre rotation; extracting kinetic energy generated by the fluid flow; and converting the kinetic energy into electrical energy, the method being characterised in that: deformation of the chamber is caused by movement of a mass connected to the chamber.

The invention uses the whole weight and size of a mass, for example, a TPMS package (that is, the entire TPMS wheel module including its sensor) or deformations of the TPMS package to induce a flow in a volume of oil (gas or liquid) contained by the package and extract the energy when the fluid flows through a small channel, thereby acting as a bellows. The fluid flow is induced either by the varying acceleration force working on the package (inertia) or by the package deformation (bellows function) from the resulting flattening of the tyre when a part of the tyre makes contact with the road. The advantage of such a method is that either the "effective seismic mass" is very large (compared with a MEMS silicon mass) as it consists of the complete package, or in the case of deformation, due to "flattening", that the bellows that contains the fluid is very large compared with the area of a silicon MEMS device used to extract the energy.

The energy from the fluid flow can be extracted in several ways. A small micromechanical turbine is one option, particularly when using a liquid. Three less technically complex realisations for an energy converter employ a Helmholtz resonator, a fipple/whistle principle and a vortex shedding principle.

A fluid (a gas or a liquid is appropriate, as described further below) is used to transfer/extract forces from the inertial mass or the package deformation to an energy converter. The method of harvesting energy also enables an increase in the frequency content of the energy and makes it possible to use a smaller, less costly and lighter weight energy converter.

The invention will now be described in detail with reference to the accompanying drawings, in which:
Figure 1 shows a first example of an energy harvesting system according to the invention ("inertia" embodiment);
Figure 2 shows a second example of an energy harvesting system according to the invention ("deformation package" embodiment);
Figures 3a to 3c illustrate an example of a bellows of the example of Figure 1;
Figure 4 shows an example of an energy harvesting system according to the invention having two nozzles;
Figure 5 shows an example of an energy harvesting system according to the invention having two chambers;
Figures 6a to 6c show the basic known behaviour of fluid flowing through each of a Helmholtz resonator, a vortex shedding arrangement and a fipple/whistle arrangement, respectively, which are used in accordance with the present invention;
Figure 7 shows an example of an energy harvesting system according to the invention having a Helmholtz resonator combined with vortex shedding; and
Figure 8 shows an example of a known micromechanical turbine.

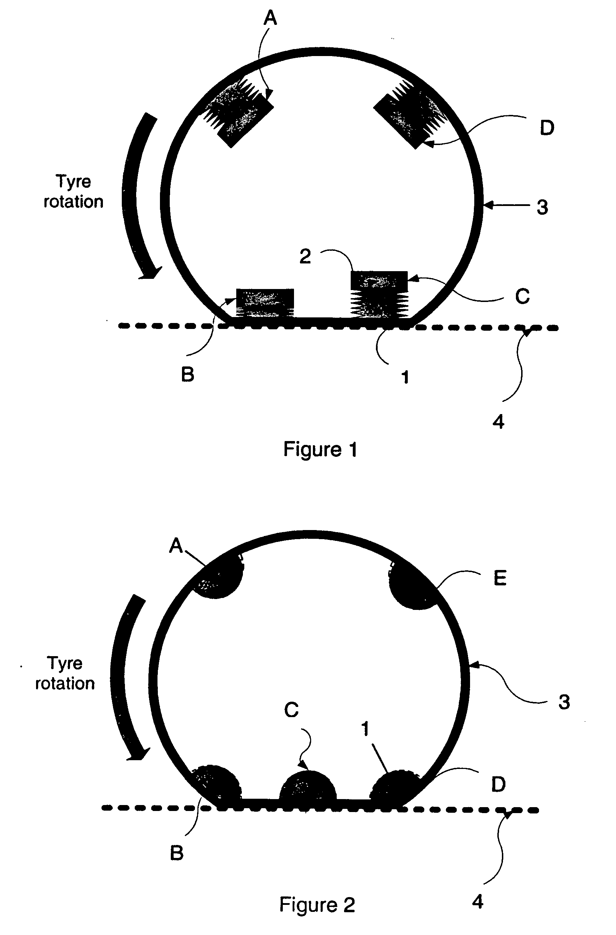

Figure 1 shows an embodiment of the invention that realise a bellows 1 that holds fluid therein and that can be deformed to enable a pumping action of the bellows 1, the bellows being deformed by an impact due to the inertia of a mass, for example including a tyre pressure monitoring system (TPMS) package 2, when a tyre surface 3 connects to and disconnects from a road surface 4 as it rotates. The bellows 1 is shown at different positions of the rotating tyre/wheel, noted A, B, C, etc. For each wheel rotation the fluid, which in this case is preferably a gas, will flow in and out of the bellows 1 in turn.

Figure 2 shows an embodiment of the invention that realises a bellows 1 that holds fluid therein and that can be deformed to enable a pumping action of the bellows 1, from the physical deformation of the tyre, when a tyre surface 3 connects to and disconnects from a road surface 4 as it rotates. The "inertia" embodiment and the "deformation package" embodiment result in exactly the same behaviour of the gas flow.

Vibrations in the tyre can also contribute to the deformation of the chamber.

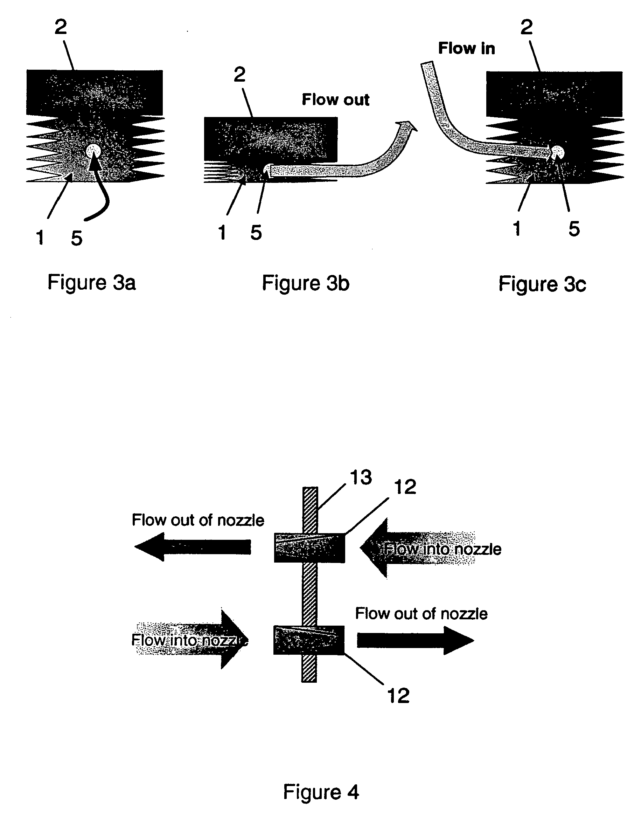

The gas flowing in and out of the bellows 1 is preferably forced through a small nozzle attached thereto. The energy converter is preferably realised as a resonant MEMS device (preferably at least one beam or blade) that intercepts the gas flow. Figure 3 illustrates a preferred position 5 of an input/output nozzle of a bellows 1 (Figure 3a) and illustrates the gas flow out of (Figure 3b) and into (Figure 3c) the bellows 1 through the nozzle. Another arrangement, shown in Figure 4, employs two nozzles 12 connected to a wall 13 of the bellows 1, one of which is a fluid input nozzle and the other of which is a fluid output nozzle. It is also possible to employ a valve system to aid in the fluid flow into and/or out of the bellows 1.

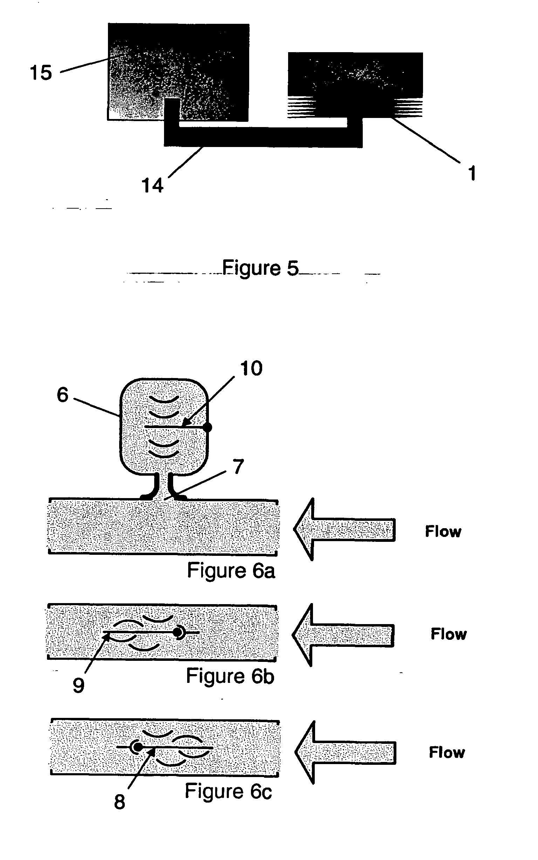

Although Figure 3 shows only one chamber, a further realisation is to use two chambers 1 connected via the nozzle, the second chamber being of constant volume. Using two chambers, as shown in Figure 5, isolates the system from the tyre "cavity". A connection 14 connects the bellows 1 to the cavity 15.

Owing to the relative dimensions of the inertial mass and the bellows, or the bellows, and the comparably small, narrow nozzle, a relatively strong gas flow is produced through the nozzle. This strong flow enables a relatively large amount of energy to be transferred to an energy converter, which preferably takes the form of a MEMS device placed in or adjacent to this gas flow. Figures 6a to 6c show three different realisations for an energy converter, namely a Helmholtz resonator (Figure 6a), a vortex shedding principle (Figure 6b) and a fipple/whistle principle (Figure 6c), which are described further in detail below.

In one embodiment, gas vibration can be created by providing a Helmholtz resonator, as shown in Figure 6a. A Helmholtz resonator is a container 6 of gas with an open hole (or neck or port) 7. It works by causing the "smooth" flow of gas acting on the volume of gas in and near the open hole 7 to vibrate because of the "springiness" of the air inside the container 6. One or more beams or blades 10 that vibrate at "high frequencies" (typically >20kHz) as a result of the acoustical vibration (resonance) are provided.

A further embodiment of the invention employs the generation of vortices in the gas flow, as shown in Figure 6c. One or more beams or blades 8 that vibrate at "high frequencies" (typically >20kHz) in a turbulent gas flow, like a whistle, are provided. This device works by causing the "smooth" flow of gas to be split by the narrow blade 8, sometimes called a fipple, creating turbulent vortices which cause the gas to vibrate.

In a further embodiment, the above function can be realised by a bluff or barrier to split the gas flow and by positioning, for example, a cantilever blade 9 in the turbulent flow, as shown in Figure 6b. This is known as vortex shedding. By attaching a resonant chamber to the basic "whistle" it may be tuned to a particular frequency and amplified. If no resonator is attached, the frequency will be a function of the intensity of the gas flow.

Combinations of either of the two vortex based methods and the Helmholtz resonator can also be realised.

The turbulent flow will cause, for example, a cantilever beam or blade to vibrate at a frequency dependent upon the flow rate. In the case of a Helmholtz resonator, or in the combination of vortices and a resonator chamber, the vibration will be at a tuned frequency dependent upon the geometrical shape of the resonator chamber and the neck or port. The frequency can be chosen to be much, much higher than the wheel rotation and/or vibration, since the mechanical resonance of the cantilever blade or the acoustic resonance of the Helmholtz resonator can be defined by appropriate mechanical dimensions.

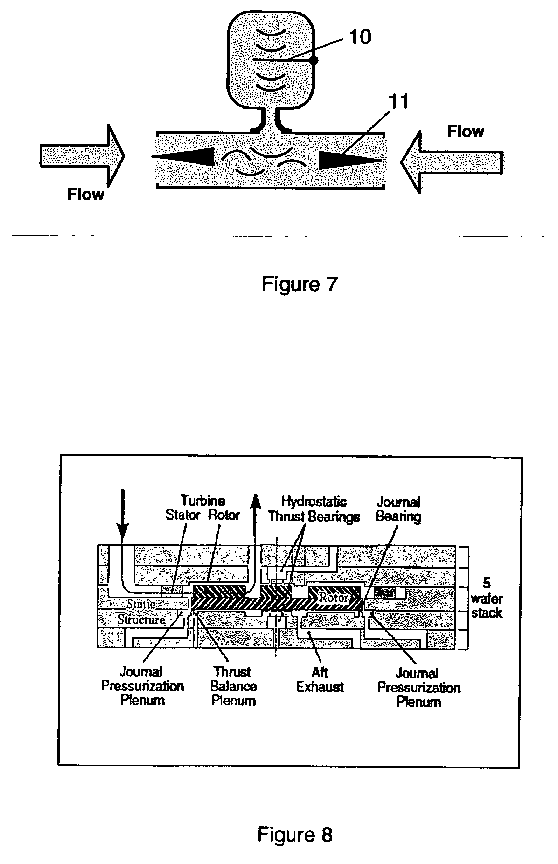

In Figures 6a to 6c only one flow direction is shown; however, the system is typically optimized for multiple flow directions using an adjusted design or using two or more resonating elements. The Helmholtz resonator can be made direction independent and combined with vortex shedding, as illustrated in figure 7, using a blade shaped barrier 11.

Conversion from kinetic energy to electrical energy is achieved by using, for example, piezoelectric materials (bulk or deposited films) to form, or as a deposit onto, the vibrating cantilever beam(s) 8, 9, 10 to generate electrical power as a result of mechanical strains caused by the vibrations. Alternatively or additionally, electret materials (bulk or films) can be used for electric bias, in combination with the vibrating cantilever beam(s), where the vibrating beam and a fixed frame act as two adjacent plates establishing a varying (due to vibrations) capacitor, generating power. Alternatively or additionally, electric coils can be used for induction, in combination with the vibrating cantilever beam(s), where a magnetic material is deposited onto or constitutes the vibrating beam, the vibrations causing inductive currents in the adjacent coil, generating power.

Alternatively to a cantilever beam, a beam or blade shaped MEMS structure, having the ability to vibrate as a result of the gas flow, can be used.

As the generated frequency is -20kHz, instead of the -20Hz as in the tyre, the electrical generator can be made much smaller (as energy = E = ½mv²) than previously realised. Thus, the MEMS chip can be much smaller and more economical than a conventional energy harvester with an integrated seismic mass. Additionally if a resonant system is realised a harmonic electrical converter can be used, which is far less complex than a broad band device. A higher frequency also results in smaller and more practical capacitors and coils for the AC-DC converter.

Instead of a gas flow, a liquid flow can be used; however, in this case two chambers must be present (as shown in Figure 5), since the liquid must be isolated from the tyre "cavity". Using a liquid lowers the operation frequency, but increases the force/moment acting upon the MEMS converter. The use of a small micromechanical turbine, a known example of which, from MIT, is shown in Figure 8, provides a preferred system and method when using a liquid rather than a gas.

## Claims

1. An energy harvesting system arranged to harvest energy generated by a rotating tyre, the system comprising:
a chamber (1) holding fluid; and
an energy converter (8, 9, 10) arranged to extract kinetic energy generated by a flow of the fluid, the flow being induced by a deformation of the chamber (1) during the tyre rotation, and further arranged to convert the kinetic energy into electrical energy,
the system being **characterised by** further comprising:
a mass (2) connected to the chamber (1), the mass being arranged to deform the chamber via a movement of the mass.

2. The system according to claim 1, wherein the mass (2) comprises a tyre pressure monitoring system (TPMS) package.

3. The system according to claim 1 or 2, wherein the chamber (1) is arranged to be deformed in response to a physical deformation of the tyre.

4. The system according to any preceding claim, wherein the chamber (1) is arranged to deform when a tyre surface (3) connects to and disconnects from an external surface (4) as the tyre rotates.

5. The system according to any preceding claim, wherein the chamber (1) is arranged to be deformed in response to vibration and rotation of the tyre.

6. The system according to any preceding claim, wherein the chamber (1) further comprises one or more bellows, each bellows having one or more openings (5) therein, each opening being arranged such that the fluid flows through the one or more openings as the tyre rotates.

7. The system according to claim 6, wherein a nozzle (12) is attached to one or more of the openings (5), such that the fluid flows through the nozzle (12) as the tyre rotates.

8. The system according to any preceding claim, wherein the energy converter (8, 9, 10) is placed at a point of intake and/or release of the fluid from the chamber (1).

9. The system according to any preceding claim, wherein the energy converter (8, 9, 10) comprises a micromechanical turbine, a Helmholtz resonator, vortex shedding arrangement, a fipple arrangement, or a combination of these.

10. The system according to any preceding claim, wherein the energy converter (8, 9, 10) comprises a micro electromechanical system (MEMS) device.

11. The system according to any preceding claim, wherein the energy converter (8, 9, 10) comprises a piezoelectric material, an electret material, a magnetic material, or a combination of these.

12. The system according to any of claims 1 to 10, wherein the energy converter (8, 9, 10) comprises a harmonic electrical converter.

13. The system according to any preceding claim, wherein the energy converter (8, 9, 10) comprises a MEMS blade or beam arranged to intercept a flow of the fluid as the tyre rotates, such that the fluid flow causes the MEMS blade or beam to vibrate.

14. The system according to any preceding claim, wherein the fluid is a gas.

15. The system according to any preceding claim, wherein the fluid is a liquid.

16. The system according to any preceding claim, further comprising a second chamber (15) of constant fluid volume.

17. A method of harvesting energy generated by a rotating tyre, the method comprising the steps of:
inducing a flow of fluid that is provided in a chamber (1), the flow being induced by a deformation of the chamber (1) during the tyre rotation;
extracting kinetic energy generated by the fluid flow; and
converting the kinetic energy into electrical energy,
the method **characterised in that**:
deformation of the chamber (1) is caused by movement of a mass (2) connected to the chamber.

## Patentansprüche

1. Energiegewinnungssystem, das zum Gewinnen von Energie ausgelegt ist, welche von einem rotierenden Reifen erzeugt wird, wobei das System Folgendes umfasst:
eine Kammer (1), die ein Fluid enthält; und
einen Energiekonverter (8, 9, 10), der zum Extrahieren von kinetischer Energie ausgelegt ist, welche durch einen Strom des Fluids erzeugt wird, wobei der Strom durch eine Verformung der Kammer (1) während der Reifenrotation induziert wird, und der ferner zum Konvertieren der kinetischen Energie in elektrische Energie ausgelegt ist,
wobei das System **dadurch gekennzeichnet ist, dass** es ferner Folgendes umfasst:
eine Masse (2), die mit der Kammer (1) verbunden ist, wobei die Masse zum Verformen der Kammer über eine Bewegung der Masse ausgelegt ist.

2. System nach Anspruch 1, wobei die Masse (2) ein Gehäuse eines Reifendrucküberwachungssystems (TPMS) umfasst.

3. System nach Anspruch 1 oder 2, wobei die Kammer (1) dafür ausgelegt ist, als Reaktion auf eine physische Verformung des Reifens verformt zu werden.

4. System nach einem der vorherigen Ansprüche, wobei die Kammer (1) dafür ausgelegt ist, sich zu verformen, wenn eine Reifenfläche (3) sich mit einer Außenfläche (4) verbindet oder sich davon trennt, während der Reifen rotiert.

5. System nach einem der vorherigen Ansprüche, wobei die Kammer (1) dafür ausgelegt ist, als Reaktion auf Vibrationen und Rotation des Reifens verformt zu werden.

6. System nach einem der vorherigen Ansprüche, wobei die Kammer (1) ferner ein oder mehrere Balgen umfasst, wobei jeder Balg ein oder mehrere Öffnungen (5) darin hat, wobei jede Öffnung so ausgelegt ist, dass das Fluid durch die eine oder mehreren Öffnungen strömt, wenn der Reifen rotiert.

7. System nach Anspruch 6, wobei eine Düse (12) an einer oder mehreren der Öffnungen (5) befestigt ist, sodass das Fluid durch die Düse (12) strömt, wenn der Reifen rotiert.

8. System nach einem der vorherigen Ansprüche, wobei der Energiekonverter (8, 9, 10) an einem Aufnahme- und/oder Freigabepunkt des Fluids aus der Kammer (1) angeordnet ist.

9. System nach einem der vorherigen Ansprüche, wobei der Energiekonverter (8, 9, 10) eine mikromechanische Turbine, einen Helmholtz-Resonator, Wirbelablösungsanordnung, eine Flötenanordnung oder eine Kombination derselben umfasst.

10. System nach einem der vorherigen Ansprüche, wobei der Energiekonverter (8, 9, 10) eine Vorrichtung eines mikroelektromechanischen Systems (MEMS) umfasst.

11. System nach einem der vorherigen Ansprüche, wobei der Energiekonverter (8, 9, 10) ein piezoelektrisches Material, ein Elektretmaterial, ein Magnetmaterial oder eine Kombination derselben umfasst.

12. System nach einem der Ansprüche 1 bis 10, wobei der Energiekonverter (8, 9, 10) einen elektrischen Harmonikkonverter umfasst.

13. System nach einem der vorherigen Ansprüche, wobei der Energiekonverter (8, 9, 10) eine MEMS-Lamelle oder einen Querbalken umfasst, der zum Abfangen eines Stroms des Fluids ausgelegt ist, wenn der Reifen rotiert, sodass der Fluidstrom bewirkt, dass die MEMS-Lamelle oder der -Querbalken vibriert.

14. System nach einem der vorherigen Ansprüche, wobei das Fluid ein Gas ist.

15. System nach einem der vorherigen Ansprüche, wobei das Fluid eine Flüssigkeit ist.

16. System nach einem der vorherigen Ansprüche, das ferner eine zweite Kammer (15) von konstantem Fluidvolumen umfasst.

17. Verfahren zum Gewinnen von Energie, die von einem rotierenden Reifen erzeugt wird, wobei das Verfahren die folgenden Schritte umfasst:
Induzieren eines Stroms des Fluids, das in einer Kammer (1) bereitgestellt wird, wobei der Strom durch eine Verformung der Kammer (1) während der Rotation des Reifens induziert wird;
Extrahieren von kinetischer Energie, die durch den Strom des Fluids erzeugt wird; und
Konvertieren der kinetischen Energie in elektrische Energie,
wobei das Verfahren **dadurch gekennzeichnet ist, dass**:
die Verformung der Kammer (1) durch Bewegen einer Masse (2) verursacht wird, die mit der Kammer verbunden ist.

## Revendications

1. Système pour recueillir de l'énergie, agencé pour recueillir de l'énergie produite par un pneumatique tournant, le système comprenant :
une chambre (1) retenant du fluide ; et
un transformateur (8, 9, 10) d'énergie agencé pour extraire de l'énergie cinétique produite par un courant du fluide, le courant étant induit par une déformation de la chambre (1) pendant la rotation du pneumatique, et conçu, en outre, pour transformer l'énergie cinétique en énergie électrique,
le système étant **caractérisé en ce qu'**il comprend, en outre :
une masse (2) reliée à la chambre (1), la masse étant agencée pour déformer la chambre par l'intermédiaire d'un mouvement de la masse.

2. Système suivant la revendication 1, dans lequel la masse (2) comprend un système de contrôle de la pression d'un pneumatique (SCPP).

3. Système suivant la revendication 1 ou 2, dans lequel la chambre (1) est agencée pour se déformer en réaction à une déformation physique du pneumatique.

4. Système suivant l'une quelconque des revendications précédentes, dans lequel la chambre (1) est agencée pour se déformer lorsqu'une surface (3) du pneumatique se lie à une surface (4) extérieure et s'en délie, alors que le pneumatique tourne.

5. Système suivant l'une quelconque des revendications précédentes, dans lequel la chambre (1) est agencée pour se déformer en réaction à une vibration et à une rotation du pneumatique.

6. Système suivant l'une quelconque des revendications précédentes, dans lequel la chambre (1) comprend, en outre, un ou plusieurs soufflets, chaque soufflet ayant en son sein une ou plusieurs ouvertures, chaque ouverture étant agencée de manière à ce que le fluide passe dans la une ou les plusieurs ouvertures, alors que le pneumatique tourne.

7. Système suivant la revendication 6, dans lequel une buse (12) est adjointe à l'une ou à plusieurs des ouvertures (5), de manière à ce que le fluide passe dans la buse (12), alors que le pneumatique tourne.

8. Système suivant l'une quelconque des revendications précédentes, dans lequel le transformateur (8, 9, 10) d'énergie est placé en un point d'admission et/ou de relâchement du fluide par la chambre (1).

9. Système suivant l'une quelconque des revendications précédentes, dans lequel le transformateur (8, 9, 10) d'énergie comprend une turbine micromécanique, un résonateur Helmholtz, un agencement de tourbillons emportés par le courant, un agencement fiple ou l'une de leurs combinaisons.

10. Système suivant l'une quelconque des revendications précédentes, dans lequel le transformateur (8, 9, 10) d'énergie comprend un dispositif à microsystème électromécanique (MSEM).

11. Système suivant l'une quelconque des revendications précédentes, dans lequel le transformateur (8, 9, 10) d'énergie comprend un matériau piézoélectrique, un matériau d'électret, un matériau magnétique ou l'une de leurs combinaisons.

12. Système suivant l'une quelconque des revendications 1 à 10, dans lequel le transformateur (8, 9, 10) d'énergie comprend un transformateur harmonique électrique.

13. Système suivant l'une quelconque des revendications précédentes, dans lequel le transformateur (8, 9, 10) d'énergie comprend une lame MSEM ou une poutre agencée pour intercepter un courant du fluide au fur et à mesure que le pneumatique tourne, de manière à ce que le courant de fluide provoque la vibration de la lame du système MSEM ou de la poutre.

14. Système suivant l'une quelconque des revendications précédentes, dans lequel le fluide est un gaz.

15. Système suivant l'une quelconque des revendications précédentes, dans lequel le fluide est un liquide.

16. Système suivant l'une quelconque des revendications précédentes, comprenant, en outre, une deuxième chambre (15) ayant un volume de fluide constant.

17. Procédé pour recueillir de l'énergie produite par un pneumatique tournant, le procédé comprenant les stades dans lesquels :
on induit un courant de fluide qui est procuré dans une chambre (1), le courant étant induit par une déformation de la chambre (1) pendant la rotation du pneumatique ;
on extrait de l'énergie cinétique produite par le courant de fluide ; et
on transforme l'énergie cinétique en de l'énergie électrique,
le procédé étant **caractérisé en ce que** :
une déformation de la chambre est provoquée par un déplacement d'une masse (2) reliée à la chambre.
